# EUROPEAN PATENT APPLICATION

(11) **EP 2 836 030 A1**
(43) Date of publication of application: **11.02.2015**
(21) Application number: 13772295.5
(22) Date of filing: 26.02.2013
(51) Int. Cl.: H04W 52/02, H04W 72/04

(54) **WIRELESS COMMUNICATION SYSTEM, USER EQUIPMENT, BASE STATION, NETWORK, AND COMMUNICATION CONTROL METHOD**

(30) Priority: 05.04.2012 JP 2012086165
(71) Applicant: NTT DOCOMO, INC., Chiyoda-ku Tokyo 100-6150 (JP)
(72) Inventor: MORIOKA, Yasufumi, Tokyo 100-6150 (JP); HAGIWARA, Junichiro, Tokyo 100-6150 (JP)
(74) Representative: Hoffmann Eitle
(86) International application number: PCT/JP2013/054941
(87) International publication number: WO 2013/150836

(57) **Abstract**

A user apparatus includes a radio communication unit capable of operating in a continuous reception mode in which receiving operations to receive control signals are continuously executed and in a discontinuous reception mode in which the receiving operations are discontinuously executed and an application running unit capable of running multiple applications in parallel. A radio communication system includes a communication frequency characteristic acquiring unit that acquires, for each of the applications, a communication frequency characteristic related to communication that each of the applications run in the user apparatus executes and a bearer decision unit that decides, for each of the applications, a bearer to be used for the communication of each of the applications according to the communication frequency characteristic of each of the applications.

## Description

### Technical Field

The present invention relates to radio communication systems, user apparatuses, base stations, networks, and communication control methods.

### Background Art

A technique is known in which, in a user apparatus (user equipment, UE) used as part of a radio communication system, executes discontinuous reception (DRX) in cases in which a period in which radio communication is not executed continues. In the above technique, every time a control signal related to packet transmission and reception (hereinafter, this may simply be referred to as a "control signal" in the present specification) is received by the user apparatus, a discontinuous reception inactivity timer (DRX inactivity timer), for determining whether to transition to the discontinuous reception mode, is started. In cases in which a control signal is not received by the time the discontinuous reception inactivity timer expires, as the user apparatus will transition to the discontinuous reception mode and discontinuously perform the reception of the control signal, compared to a configuration in which it is continuously possible to receive the control signal (when the continuous reception mode is continued continuously), it is possible to reduce the power consumption of the user apparatus.

Such discontinuous reception technique can be exemplified by the technique of Non-Patent Document 1 in which a base station instructs a user apparatus to transition to the discontinuous reception mode. In the technique of Non-Patent Document 1, a reduction in the power consumption of the user apparatus is realized by configuring the length of the sleep period (the period during which receiving operation is not executed) during the discontinuous reception mode to be longer accordingly with the longer the time the user apparatus does not receive a control signal.

### Citation List

### Non-Patent Document

Non-Patent Document 1: IEEE Standard 802.16e-2005

### Summary of Invention

### Technical Problem

In conventional discontinuous reception techniques, it is common that parameters related to discontinuous reception (for example, the time required until transitioning to the discontinuous reception mode, the execution cycle of discontinuous reception, etc.) are configured in units of a user apparatus. Meanwhile, along with the increased functions and improved performance of user apparatuses, it has become possible to execute multiple applications (for example, an application for web browsing, an application for a social networking service, etc.) on the user apparatus in parallel. Each of these applications that operate on the user apparatus, due to executing network communication (transmission and reception of packets) according to the functions of each, has communication frequency characteristics (for example, an average packet occurrence interval) unique to each. For this reason, there is a possibility that parameters relating to discontinuous reception will not be configured appropriately, and thus, there is a possibility that discontinuous reception operation to be executed will not be appropriate, depending on the combination of the applications that operate in the user apparatus.

In view of the abovementioned situations, an object of the present invention is to make it possible to execute an appropriate discontinuous reception operation, even in a case in which it is possible for a user apparatus to execute multiple applications in parallel.

### Solution to Problem

A radio communication system according to the present invention includes a user apparatus; and a base station including a radio communication unit capable of transmitting control signals related to packet transmission and reception to the user apparatus. The user apparatus includes: a radio communication unit that executes radio communication using multiple bearers established with the base station; and an application running unit capable of running multiple applications in parallel. The radio communication system includes: a communication frequency characteristic acquiring unit that acquires, for each of the applications, a communication frequency characteristic related to communication that each of the applications run in the user apparatus executes via the radio communication unit of the user apparatus; and a bearer decision unit that decides, for each of the applications, a bearer to be used for the communication of each of the applications according to the communication frequency characteristic of each of the applications.

With the above-mentioned configuration, the bearer to be used for the communication of each of the applications is decided based on the communication frequency characteristic acquired for each of the applications. As a result, compared to a configuration in which a bearer is decided without being based on a communication frequency characteristic, the communication of each application can be assigned to a bearer having appropriate attributes.

In a preferred embodiment of the present invention, the radio communication unit of the user apparatus is capable of operating in a continuous reception mode in which receiving operations to receive the control signals are continuously executed and in a discontinuous reception mode in which the receiving operations are discontinuously executed. The radio communication system includes: a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires. The user apparatus includes: a discontinuous reception control unit that controls the receiving operations in the discontinuous reception mode and reception mode transition of the radio communication unit of the user apparatus based on the discontinuous reception parameters decided for the bearers. The base station includes: a transmission control unit that determines whether or not the radio communication unit of the user apparatus is executing the receiving operations based on the discontinuous reception parameters decided for the bearers and controls the radio communication unit of the base station to transmit the control signals while in a period in which the radio communication unit of the user apparatus is determined to be executing the receiving operations.

With the above-mentioned configuration, the receiving operations in the reception mode and the reception mode transition of the user apparatus are controlled based on the discontinuous reception parameters decided for each of the bearers based on the communication frequency characteristic of each of the applications. As a result, compared to a configuration in which these are controlled based on discontinuous reception parameters decided in units of the user apparatus, flexible control can be provided. In particular, after the discontinuous reception completion timer value has expired for a particular bearer, it becomes possible to provide control based on the discontinuous reception parameter decided for a bearer other than the particular bearer.

In a preferred embodiment of the present invention, the discontinuous reception parameter decision unit decides the transition timer value, the discontinuous reception offset value, the discontinuous reception cycle, and the discontinuous reception completion time value as the discontinuous reception parameters.

In a preferred embodiment of the present invention, the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and the discontinuous reception control unit of the user apparatus acquires, for each of the bearers, a period in which the receiving operations should be executed in the discontinuous reception mode based on the discontinuous reception parameters and controls the radio communication unit to execute the receiving operations while in a period in which the receiving operations should be executed for any of the bearers.

With the above-mentioned configuration, due to each discontinuous reception offset value being decided to be a value that is common to every bearer, the time point at which the first receiving operations are executed after transitioning to the discontinuous reception mode becomes common to every bearer. Accordingly, compared to a configuration in which it is determined with each bearer that the receiving operations should be executed immediately after transitioning to the discontinuous reception mode, as cases in which the periods in which the receiving operations should be executed become common to every bearer increase, it is possible to realize a reduction in the total execution time of the receiving operations in the user apparatus in the discontinuous reception mode, and thus to realize a reduction of the power consumption of the user apparatus. Furthermore, due to each discontinuous reception cycle being decided to be a value that is an integral multiple of the minimum value of the discontinuous reception cycles in the user apparatus, the periods in which the receiving operations should be executed determined based on the minimum discontinuous reception cycle overlaps with the periods in which the receiving operations should be executed, determined based on other (in other words, larger) discontinuous reception cycles. Accordingly, compared to a configuration in which a discontinuous reception cycle of every bearer is configured freely without applying a limitation such as that mentioned in the above, as cases in which the periods in which the receiving operations should be executed become common to every bearer increase, it is possible to realize a reduction in the total execution time of the receiving operations in the user apparatus in the discontinuous reception mode, and thus to realize a reduction in power consumption of the user apparatus.

A user apparatus according to the present invention includes: a radio communication unit that executes radio communication using multiple bearers established with a base station; an application running unit capable of running multiple applications in parallel; a communication frequency characteristic acquiring unit that acquires, for each of the applications, a communication frequency characteristic related to communication that each of the applications executes via the radio communication unit; and a bearer decision unit that decides, for each of the applications, a bearer to be used for the communication of each of the applications according to the communication frequency characteristic of each of the applications.

In a preferred embodiment of the present invention, the radio communication unit is capable of operating in a continuous reception mode in which receiving operations to receive control signals transmitted from the base station and related to packet transmission and reception are continuously executed and in a discontinuous reception mode in which the receiving operations are discontinuously executed. The user apparatus includes: a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires; and a discontinuous reception control unit that controls the receiving operations in the discontinuous reception mode and reception mode transition of the radio communication unit based on the discontinuous reception parameters decided for the bearers.

In a preferred embodiment of the present invention, the discontinuous reception parameter decision unit decides the transition timer value, the discontinuous reception offset value, the discontinuous reception cycle, and the discontinuous reception completion time value as the discontinuous reception parameters.

In a preferred embodiment of the present invention, the discontinuous reception parameter decision unit decides each of the discontinuous reception offset values to be a value common to the bearers and decides each of the discontinuous reception cycles to be a value that is an integral multiple of a minimum value of the discontinuous reception cycles; and the discontinuous reception control unit acquires, for each of the bearers, a period in which the receiving operations should be executed in the discontinuous reception mode based on the discontinuous reception parameters and controls the radio communication unit to execute the receiving operations while in a period in which the receiving operations should be executed for any of the bearers.

A base station according to the present invention is a base station in a radio communication system including: the base station including a radio communication unit capable of transmitting control signals related to packet transmission and reception; and a user apparatus that is capable of operating in a continuous reception mode in which receiving operations to receive the control signals are continuously executed and in a discontinuous reception mode in which the receiving operations are discontinuously executed and that runs multiple applications capable of communicating. The communication of the applications is run using bearers, the bearers are established with the user apparatus and the base station, a communication frequency characteristic for communication executed by the user apparatus is acquired for each of the applications, and each of the bearers is decided, for each of the applications, according to the communication frequency characteristic of each of the applications. The base station includes: a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires; and a transmission control unit that determines whether or not the user apparatus is executing the receiving operations based on the discontinuous reception parameters decided for the bearers and controls the radio communication unit to transmit the control signals while in a period in which the user apparatus is determined to be executing the receiving operations.

In a preferred embodiment of the present invention, the discontinuous reception parameter decision unit decides the transition timer value, the discontinuous reception offset value, the discontinuous reception cycle, and the discontinuous reception completion time value as the discontinuous reception parameters.

In a preferred embodiment of the present invention, the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and the transmission control unit determines, for each of the bearers, a period in which the user apparatus should execute the receiving operations based on the discontinuous reception parameters and controls the radio communication unit to transmit the control signals while in a period determined as a period in which the receiving operations should be executed for any of the bearers.

A network according to the present invention includes: a base station including a radio communication unit capable of transmitting control signals related to packet transmission and reception to a user apparatus. The user apparatus is capable of running multiple applications capable of communicating. The network includes: a communication frequency characteristic acquiring unit that acquires, for each of the applications, a communication frequency characteristic related to communication that each of the applications run in the user apparatus executes via the radio communication unit of the user apparatus; and a bearer decision unit that decides, for each of the applications, a bearer to be used for the communication of each of the applications according to the communication frequency characteristic of each of the applications.

In a preferred embodiment of the present invention, the user apparatus is capable of operating in a continuous reception mode in which receiving operations to receive the control signals are continuously executed and in a discontinuous reception mode in which the receiving operations are discontinuously executed. The network further includes: a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires. The base station includes: a transmission control unit that determines whether or not the user apparatus is executing the receiving operations based on the discontinuous reception parameters decided for the bearers and controls the radio communication unit to transmit the control signals while in a period in which the user apparatus is determined to be executing the receiving operations.

In a preferred embodiment of the present invention, the discontinuous reception parameter decision unit decides the transition timer value, the discontinuous reception offset value, the discontinuous reception cycle, and the discontinuous reception completion time value as the discontinuous reception parameters.

In a preferred embodiment of the present invention, the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and the transmission control unit determines of the base station, for each of the bearers, a period in which the user apparatus should execute the receiving operations based on the discontinuous reception parameters and controls the radio communication unit to transmit the control signals while in a period determined as a period in which the receiving operations should be executed for any of the bearers.

A communication control method according to the present invention is a communication control method in a radio communication system including: a base station including a radio communication unit capable of transmitting control signals related to packet transmission and reception; and a user apparatus including a radio communication unit capable of executing radio communication using multiple bearers established with the base station. The communication control method includes: running multiple applications in parallel in the user apparatus; acquiring, for each of the applications, a communication frequency characteristic related to communication that each of the applications run in the user apparatus executes via the radio communication unit of the user apparatus; and deciding, for each of the applications, a bearer to be used for the communication of each of the applications according to the communication frequency characteristic of each of the applications.

In a preferred embodiment of the present invention, the radio communication unit of the user apparatus is capable of operating in a continuous reception mode in which receiving operations to receive the control signals are continuously executed and in a discontinuous reception mode in which the receiving operations are discontinuously executed. The communication control method includes: deciding, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires; in the user apparatus, controlling the receiving operations in the discontinuous reception mode and reception mode transition of the radio communication unit of the user apparatus based on the discontinuous reception parameters decided for the bearers; and, in the base station, determining whether or not the radio communication unit of the user apparatus is executing the receiving operations based on the discontinuous reception parameters decided for the bearers and controlling the radio communication unit of the base station to transmit the control signals while in a period in which the radio communication unit of the user apparatus is determined to be executing the receiving operations.

In a preferred embodiment of the present invention, in the deciding of the discontinuous reception parameter, the transition timer value, the discontinuous reception offset value, the discontinuous reception cycle, and the discontinuous reception completion time value are decided as the discontinuous reception parameters.

In a preferred embodiment of the present invention, in the deciding of the discontinuous reception parameters, each of the discontinuous reception offset values in the user apparatus is decided to be a value common to the bearers and each of the discontinuous reception cycles is decided to be a value that is an integral multiple of a minimum value of the discontinuous reception cycles in the user apparatus. In the controlling of the receiving operations and the reception mode transition, a period in which the receiving operations should be executed in the discontinuous reception mode is acquired for each of the bearers based on the discontinuous reception parameters, and the radio communication unit is controlled to execute the receiving operations while in a period in which the receiving operations should be executed for any of the bearers.

### Brief Description of Drawings

Fig. 1 is a block diagram illustrating a radio communication system according to an embodiment of the present invention.
Fig. 2 is a block diagram illustrating a configuration of a user apparatus according to an embodiment of the present invention.
Fig. 3 is a block diagram illustrating a configuration of a base station according to an embodiment of the present invention.
Fig. 4 is a block diagram illustrating a configuration of a gateway according to an embodiment of the present invention.
Fig. 5 is a drawing that exemplifies the relationship of a bearer and communication with an application in an embodiment.
Fig. 6 is an explanatory drawing of operations of a user apparatus and a base station upon transitioning from a continuous reception mode to a discontinuous reception mode.
Fig. 7 is an explanatory drawing of discontinuous reception operations in a case in which multiple applications are executed with a user apparatus.
Fig. 8 is an explanatory drawing of discontinuous reception operations suitable for communication with multiple applications.
Fig. 9 is a drawing illustrating one example of the problems in discontinuous reception operations.
Fig. 10 is a drawing illustrating one example of the problems in discontinuous reception operations.
Fig. 11 is a drawing illustrating the configuration of a radio frame used in radio communication between a user apparatus and a base station.
Fig. 12 is a drawing illustrating one example of discontinuous reception operations in a case in which the time that the discontinuous reception mode should be started differs for each bearer.
Fig. 13 is a drawing illustrating one example of discontinuous reception operations in a case in which the discontinuous reception cycle differs for each bearer.

### Description of Embodiments

### 1. Configuration of Radio Communication System

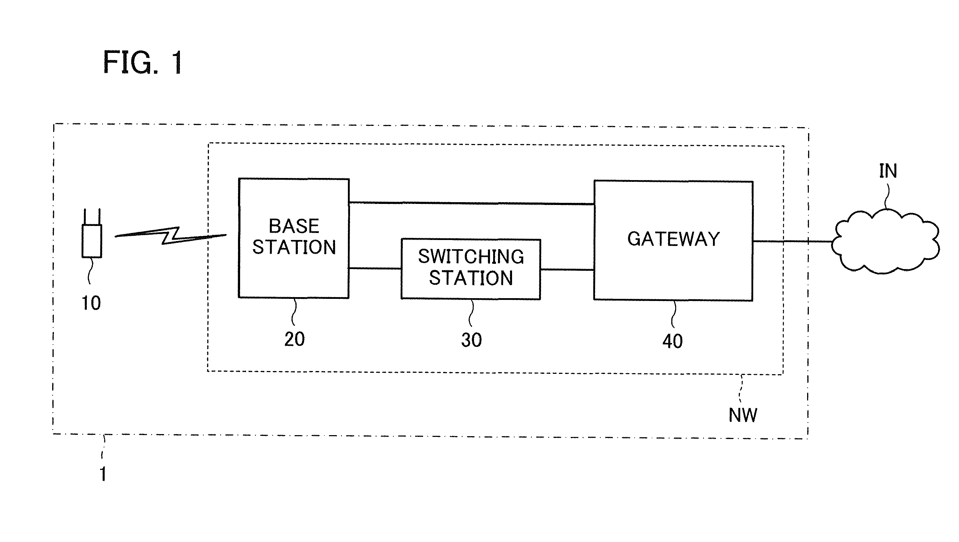

Fig. 1 is a block diagram of a radio communication system 1 according to an embodiment of the present invention. The radio communication system 1 includes a user apparatus (user equipment, UE) 10 and a network NW. The network NW includes, as nodes, a base station 20, a switching station 30, and a gateway 40. The user apparatus 10 connects wirelessly to the base station 20. The base station 20 connects by wire to the switching station 30 and the gateway 40. Furthermore, it shall be noted that it is also possible to employ a configuration in which the nodes within the network NW are wirelessly connected to each other. With the gateway 40 as a connection point, the network NW is connected to an internet IN that is an external network. Starting with Fig. 1, although only one user apparatus 10, one base station 20, one switching station 30, and one gateway 40 are exemplified in the present embodiment for convenience, it can of course be understood that the radio communication system 1 may include multiple user apparatuses 10, multiple base stations 20, multiple switching stations 30, and multiple gateways 40.

Each element in the radio communication system 1 executes communication according to a predetermined access technology, for example, Long Term Evolution / System Architecture Evolution (LTE / SAE) prescribed by the Third Generation Partnership Project (3GPP) Standards. In the present embodiment, although a mode in which the radio communication system 1 operates according to LTE / SAE is explained as an example, this is not intended to limit the technological scope of the present invention. The present invention is, upon implementing necessary changes to the design thereof, capable of being applied to other access technologies as well. Furthermore, it shall be noted that the method of the radio communication between the user apparatus 10 and the base station 20 may be freely selected. For example, it is possible to employ Orthogonal Frequency Division Multiple Access (OFDMA) for the downlink, and it is possible to employ Single-Carrier Frequency Division Multiple Access (SC-FDMA) for the uplink.

### 1(1). Configuration of User Apparatus

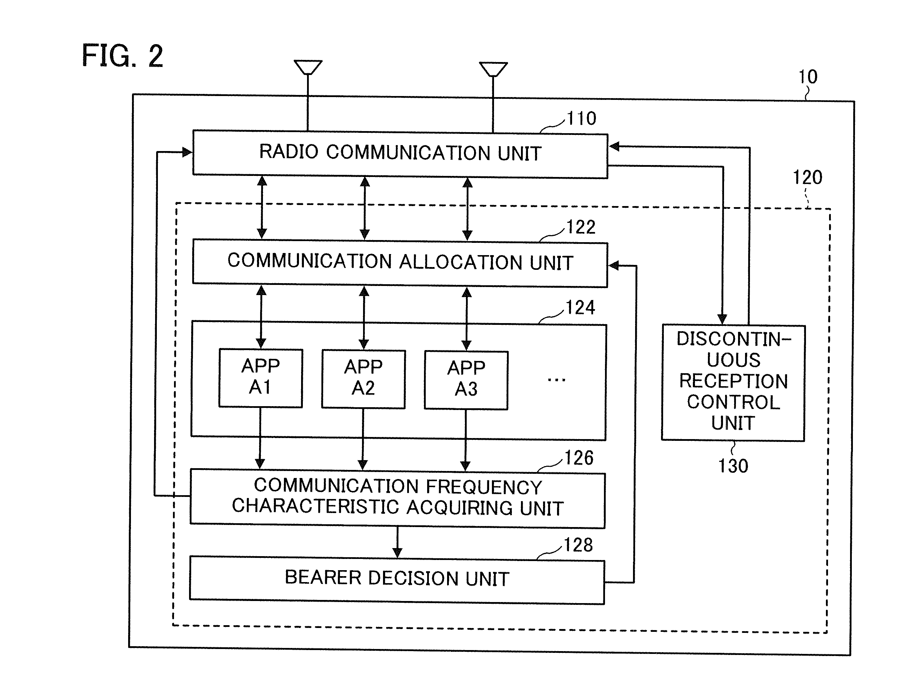

Fig. 2 is a block diagram illustrating the configuration of the user apparatus 10 according to the embodiment of the present invention. The user apparatus 10 includes a radio communication unit 110 and a control unit 120. Furthermore, it shall be noted that illustrations of, for example, an output device that outputs sound, video, etc., and an input device that accepts instructions from a user, are omitted for convenience.

The radio communication unit 110 is an element for executing radio communication with the base station 20 and includes a transmission and reception antenna, a conversion circuit that receives radio waves from the base station 20 and converts the radio waves into electrical signals, and a transmission circuit that converts electrical signals such as voice signals into radio waves and transmits the radio waves. The radio communication unit 110 executes radio communication using multiple bearers B established with the base station 20. The radio communication unit 110 is capable of operating in a continuous reception mode in which receiving operations to receive control signals related to packet transmission and reception and sent from the base station 20 are continuously executed and in a discontinuous reception mode in which the receiving operations are discontinuously executed. The radio communication unit 110 executes transmission and reception of packets based on the control signals that have been received.

The control unit 120 includes a communication allocation unit 122, an application running unit 124, a communication frequency characteristic acquiring unit 126, a bearer decision unit 128, and a discontinuous reception control unit 130. The application running unit 124 is capable of running multiple applications A (A1, A2, A3...) in parallel (it shall be noted that "App" in Fig. 2 is an abbreviated form of the word "Application". The same is applicable to the other drawings as well). Each application A is capable of executing communication (transmission and reception of packets) via the radio communication unit 110. The communication frequency characteristic acquiring unit 126 acquires a communication frequency characteristic VC (for example, an average packet occurrence interval) of each application A for every application A. The bearer decision unit 128 decides, for every application A, a bearer B used for the communication of each application A according to the communication frequency characteristic VC (VC1, VC2, VC3...) acquired for every application A (A1, A2, A3...) and notifies corresponding information of the application A and the bearer B to the communication allocation unit 122. The communication allocation unit 122 assigns the communication of each application A to each bearer B based on the corresponding information notified from the bearer decision unit 128. The discontinuous reception control unit 130 controls, based on discontinuous reception parameters DP that will be explained later, the reception mode transition of the radio communication unit 110 and the receiving operations in the discontinuous reception mode. The details of the abovementioned operations will be explained later.

The control unit 120 and the elements included in the control unit 120 (the communication allocation unit 122, the application running unit 124, the communication frequency characteristic acquiring unit 126, the bearer decision unit 128, and the discontinuous reception control unit 130) are functional blocks. A Central Processing Unit (CPU), not shown, in the user apparatus 10 executes computer programs stored in a storage unit, not shown. The above-mentioned functional blocks are realized by functioning according to the computer programs. In addition, each application A (A1, A2, A3...) executed by the application running unit 124 is similar to the above. Application A may be stored in the storage unit at the time of manufacturing of the user apparatus 10, or it may be stored in the storage unit when it is downloaded to the user apparatus 10 from, for example, the internet IN.

### 1(2). Configuration of Base Station

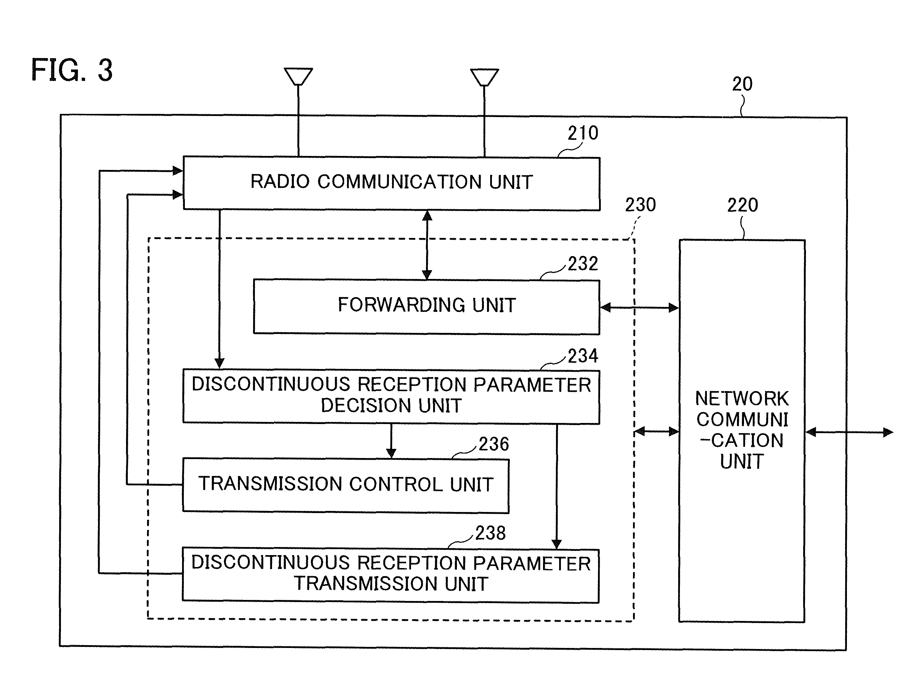

Fig. 3 is a block diagram illustrating the configuration of the base station 20 according to the embodiment of the present invention. The base station 20 includes a radio communication unit 210, a network communication unit 220, and a control unit 230.

The radio communication unit 210 is an element capable of transmitting radio signals (control signals and packets) to the user apparatus 10 and includes a transmission and reception antenna, a reception circuit that receives radio waves from the user apparatus 10 and converts the radio waves into electrical signals, and a transmission circuit that converts electrical signals such as voice signals into radio waves and transmits the radio waves.

The network communication unit 220 is an element for executing communication with each of the nodes in the network NW and transmits and receives electrical signals between other nodes. In cases in which the base station 20 executes communication with the other nodes wirelessly, it is also possible to employ a configuration in which the radio communication unit 210 also serves as the network communication unit 220.

The control unit 230 includes a forwarding unit 232, a discontinuous reception parameter decision unit 234, a transmission control unit 236, and a discontinuous reception parameter transmission unit 238. The forwarding unit 232 forwards signals (packets) received from the user apparatus 10 via the radio communication unit 210 to other nodes (such as the gateway 40) via the network communication unit 220 and also forwards signals (packets) directed at the user apparatus 10 from other nodes (such as the gateway 40) received via the network communication unit 220 to the user apparatus 10. The discontinuous reception parameter decision unit 234 decides, for each of the bearers B, discontinuous reception parameters DP used for controlling the discontinuous reception executed by the radio communication unit 110 of the user apparatus 10 based on a communication frequency characteristic CV of at least one application A assigned to the bearer B. The transmission control unit 236 determines, based on the discontinuous reception parameters DP, whether or not the radio communication unit 110 of the user apparatus 10 is executing receiving operations and controls the radio communication unit 210 of the base station 20 to transmit control signals and packets while in the period in which the radio communication unit 110 of the user apparatus 10 is determined to be executing the receiving operations. The discontinuous reception parameter transmission unit 238 transmits the discontinuous reception parameters DP that have been acquired by the user apparatus 10 via the radio communication unit 210. The details of the abovementioned operations will be explained later.

The control unit 230 and the elements included in the control unit 230 (the forwarding unit 232, the discontinuous reception parameter decision unit 234, the transmission control unit 236, and the discontinuous reception parameter transmission unit 238) are functional blocks. A Central Processing Unit (CPU), not shown, in the base station 20 executes computer programs stored in a storage unit, not shown. The above-mentioned functional blocks are realized by functioning according to the computer programs.

### 1(3). Configuration of Gateway

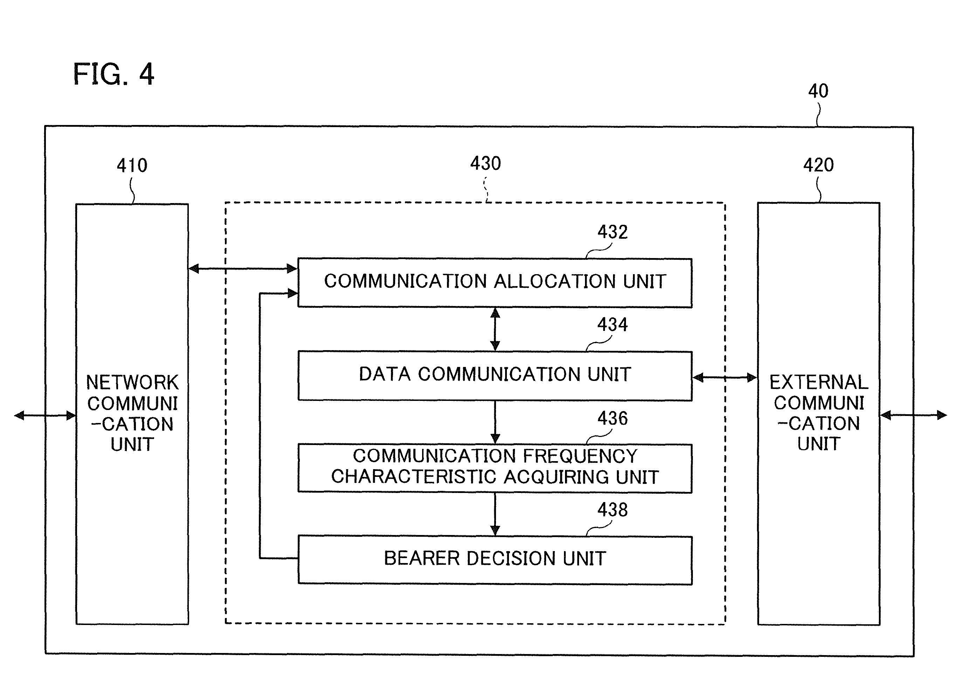

Fig. 4 is a block diagram illustrating the configuration of the gateway 40 according to the embodiment of the present invention. The gateway 40 includes a network communication unit 410, an external communication unit 420, and a control unit 430.

The network communication unit 410 is an element for executing communication with each of the nodes within the network NW and transmits and receives electrical signals between other nodes by wire or wirelessly. The external communication unit 420 is an element for executing communication with the internet IN, which is an external network, and transmits and receives electrical signals to and from the internet IN. The external communication unit 420 is capable of performing protocol conversions as needed.

The control unit 430 includes a communication allocation unit 432, a data communication unit 434, a communication frequency characteristic acquiring unit 436, and a bearer decision unit 438. The data communication unit 434 executes communication (transmission and reception of packets) with each of the multiple applications A executed in the user apparatus 10. The communication frequency characteristic acquiring unit 436 acquires a communication frequency characteristic VC of each application A for every application A. The bearer decision unit 438 decides, for every application A, a bearer B used for the communication of each application A according to the communication frequency characteristic VC acquired for every application A and notifies corresponding information of the application A and the bearer B to the communication allocation unit 432. The communication allocation unit 432 assigns the communication of each application A to each bearer B based on the corresponding information notified from the bearer decision unit 438.

The control unit 430 and the elements included in the control unit 430 (the communication allocation unit 432, the data communication unit 434, the communication frequency characteristic acquiring unit 436, and the bearer decision unit 438) are functional blocks. A Central Processing Unit (CPU), not shown, in the gateway 40 executes computer programs stored in a storage unit, not shown. The abovementioned functional blocks are realized by functioning according to the computer programs.

### 2. Transmission and Reception Operations

### 2(1). Relationship of Bearers and Communication with Applications

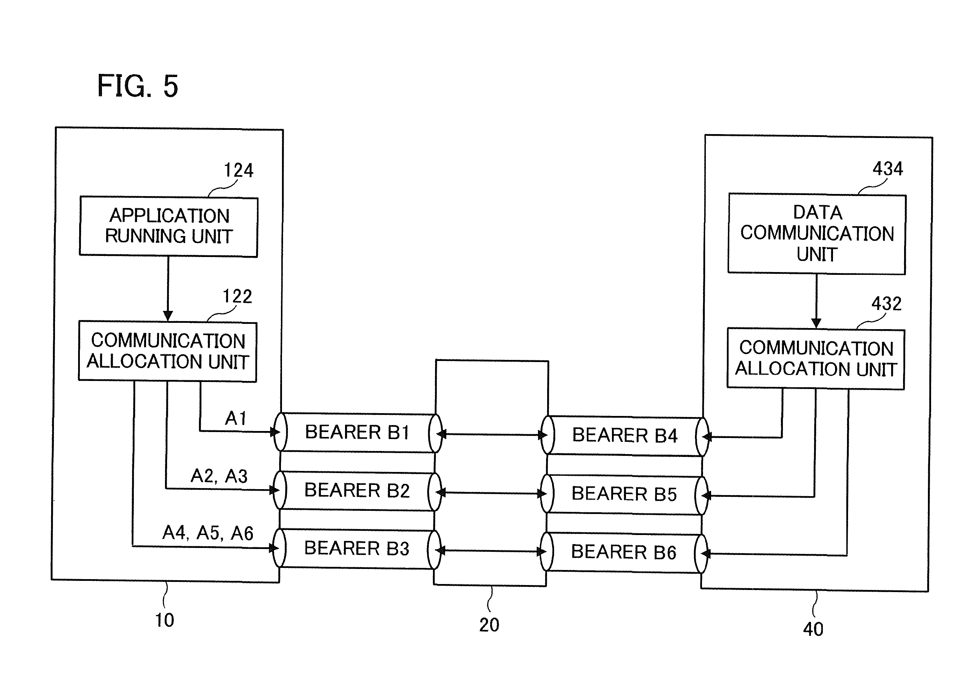

Fig. 5 is a drawing that exemplifies the relationship of bearers B and communication with applications A in the embodiment of the present invention. It is assumed that the bearers B1, B2, and B3 are configured for communication between the user apparatus 10 and the base station 20, whereas the bearers B4, B5, and B6 are configured for communication between the base station 20 and the gateway 40. The bearer B1 corresponds to the bearer B4, the bearer B2 corresponds to the bearer B5, and the bearer B3 corresponds to the bearer B6. As mentioned above, an application A that is executed in the user apparatus 10 executes communication using a bearer B. It is possible for a single bearer B to be utilized for communication of multiple applications A. Each of the multiple bearers B may have different attribute values (capacity, error properties, delay, etc.) (corresponding bearers B may have the same attribute values). Therefore, which bearer B is used by a certain application A in communicating is decided by the bearer decision unit 128 such that a communication frequency characteristic VC of that application A and the attribute values of that bearer B are consistent with each other. For example, to application A that transmits and receives data more frequently is assigned bearer B having a larger capacity.

In Fig. 5, a configuration in which the one application A1 is assigned to the bearers B1 and B4, the two applications A2 and A3 are assigned to the bearers B2 and B5, and the three applications A3, A4, and A5 are assigned to the bearers B3 and B6 is exemplified. Data packets generated by the application A1 executed in the application running unit 124 are transmitted to the base station 20 via the bearer B1 by the communication allocation unit 122 and are further transmitted to the gateway 40 via the bearer B4. The same applies to other applications A and bearers B. Furthermore, it shall be noted that it is preferable that the communication allocation unit 122 be configured based on the Traffic Flow Template prescribed by the 3GPP Standard (for example, as prescribed in 10.5.6.12 of 3GPP TS 24.008 V11.1.2).

While the uplink communication from the user apparatus 10 to the side of the network NW was explained, the downlink communication from the side of the network NW to the user apparatus 10 is similar to that which has been explained in the above. In other words, in the gateway 40, a bearer B is decided according to communication frequency characteristic VC of an application A that is the destination. The data packets that the data communication unit 434 transmits in relation to the application A1 are transmitted to the base station 20 via the bearer B4 by the communication allocation unit 432 and are further transmitted to the user apparatus 10 via the bearer B 1. The same applies to other applications A and bearers B.

### 2(2). Transition to Discontinuous Reception Mode and Discontinuous Reception Operation

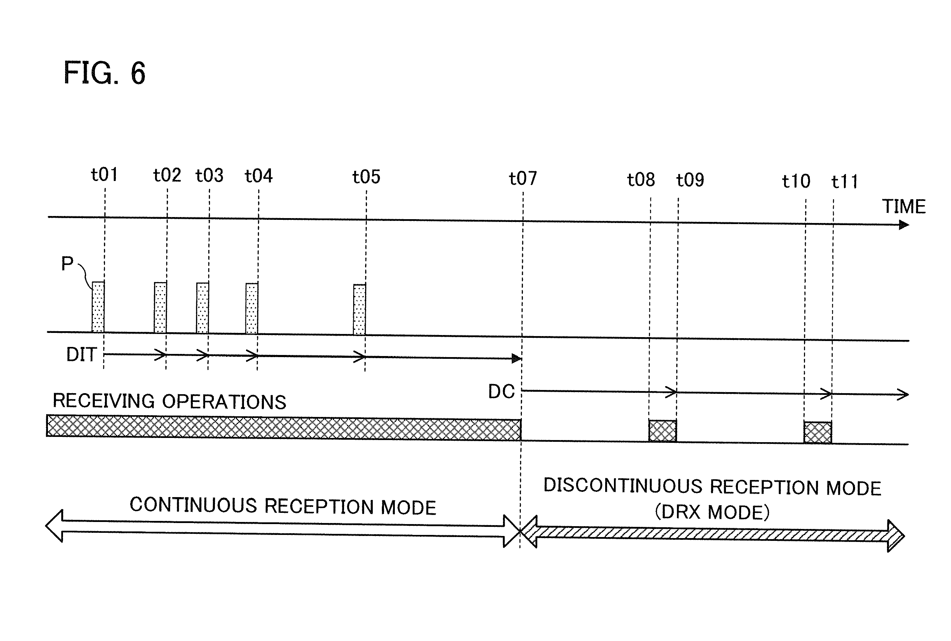

Fig. 6 is an explanatory drawing of an operation of the user apparatus 10 and the base station 20 upon transitioning from a continuous reception mode to a discontinuous reception (DRX) mode. The continuous reception mode refers to a state in which the user apparatus 10 is continuously capable of receiving control signals transmitted from the base station 20 (a mode in which receiving operations are continuously executed), and more specifically, refers to a mode in which the user apparatus 10 continuously monitors (receives) a physical downlink control channel (PDCCH) that indicates transmission and reception control information (such as schedule information) to the user apparatus 10. Meanwhile, the discontinuous reception mode refers to a mode in which the user apparatus 10 is discontinuously capable of receiving control signals (a mode in which the receiving operations are discontinuously executed), and more specifically, refers to a mode in which the user apparatus 10 discontinuously monitors (receives) the physical downlink control channel (PDCCH).

The base station 20 transmits control signals and packets to the user apparatus 10 with which a radio connection has been established. Once transmission and reception (downlink transmission and reception) from the base station 20 to the user apparatus 10 has been completed, each of the user apparatus 10 and the base station 20 starts a discontinuous reception (DRX) inactivity timer DIT (at each time of t01 through t05). The discontinuous reception inactivity timer DIT expires when a discontinuous reception inactivity timer value VD elapses (at a time t7). In addition, when a control signal is transmitted from the base station 20 to the user apparatus 10 before the discontinuous reception inactivity timer DIT expires, each of the user apparatus 10 and the base station 20 starts the discontinuous reception (DRX) inactivity timer DIT (at each time of t02 through t05) again. In other words, the discontinuous reception inactivity timer DIT is reset with the transmission and reception of the control signal. When the discontinuous reception inactivity timer DIT expires, the user apparatus 10 transitions to the discontinuous reception (DRX) mode. In other words, the discontinuous reception inactivity timer value VD is the required time from when the user apparatus 10, in the continuous reception mode, no longer receives control signals up until when the user apparatus 10 transitions to the discontinuous reception mode.

Once transitioning to the discontinuous reception mode, the user apparatus 10, executes (time t08 though time t09, time t10 through t11) receiving operations (monitoring of the physical downlink control channel) for the duration of discontinuous reception duration (on duration) OD once for every discontinuous reception cycle DC. Here, while it is possible for the transmission operations of the base station 20 to be executed freely, it is preferable that downlink transmission be executed during the period in which the user apparatus 10 is executing the receiving operations. In the discontinuous reception mode, in the case in which an idle transition timer ITT expires (in the case in which the user apparatus 10 does not receive control signals from when the discontinuous reception mode is started to until a certain idle transition timer value VI has elapsed), the user apparatus 10 transitions to the idle mode (a mode in which the radio connection with the base station 20 is released) and the discontinuous reception mode ends. In addition, in the case in which control signals are received while in the discontinuous reception mode, the user apparatus 10 transitions to the continuous reception mode.

### 2(3). Problems with Discontinuous Reception Operations in cases in which Multiple Applications are to be executed

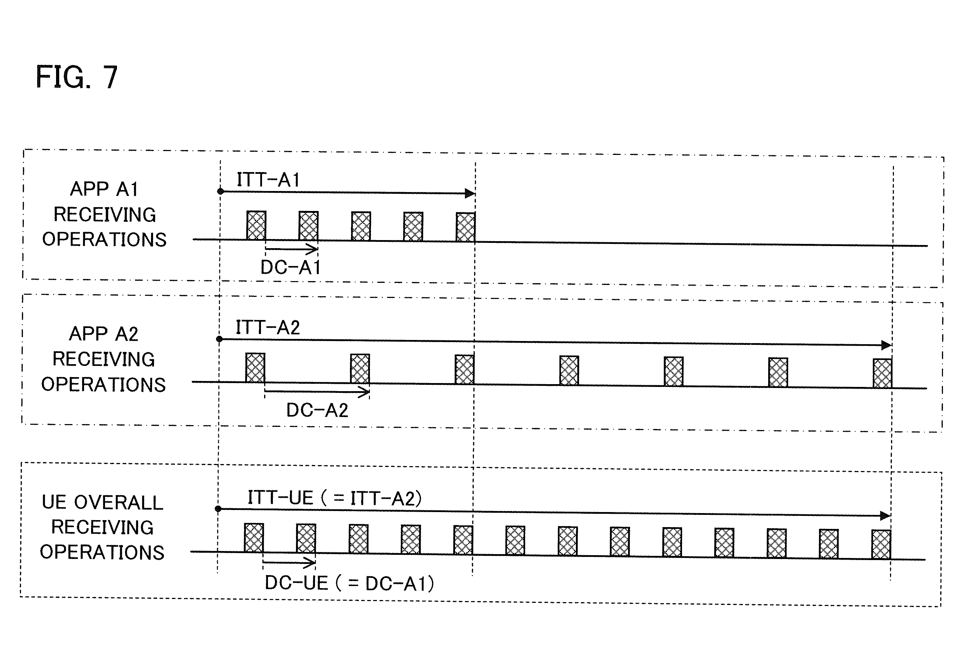

In reference to Fig. 7, the discontinuous reception operations in a case in which multiple applications A are executed in the user apparatus 10 (the application running unit 124) will be explained. In the example of Fig. 7, it is assumed that two applications A1 and A2 are executed in the user apparatus 10. As mentioned in the above, each application A is capable of executing communication (transmission and reception of packets).

The application A1 has communication frequency characteristic VC for executing discontinuous reception having a short overall period of the discontinuous reception mode and a high frequency of executing receiving operations. Accordingly, as illustrated in Fig. 7, for the application A1, it is preferable that a relatively short idle transition timer ITT-A1 and a relatively short discontinuous reception cycle DC-A1 be configured.

In addition, the application A2 has communication frequency characteristic VC for executing discontinuous reception having a long overall period of the discontinuous reception mode and a low frequency of executing receiving operations. Accordingly, as illustrated in Fig. 7, for the application A2, it is preferable that a relatively long idle transition timer ITT-A2 and a relatively long discontinuous reception cycle DC-A2 be configured.

With the configuration mentioned in the above in the item 2(2), a single idle transition timer ITT and a single discontinuous reception cycle DC is configured to one user apparatus 10. Accordingly, in order to satisfy requirements of both applications A1 and A2 with the abovementioned configuration of the item 2(2), as illustrated in Fig. 7, it is necessary to configure a longer idle transition timer ITT-A2 to an idle transition timer ITT-UE of the user apparatus 10 and a shorter discontinuous reception cycle DC-A1 to a discontinuous reception cycle DC-UE of the user apparatus 10. However, with the above configuration, because receiving operations are executed very frequently over a long period of time, the power consumption of the user apparatus 10 will increase.

### 3. Discontinuous Reception Operations Suitable for Communication with Multiple Applications

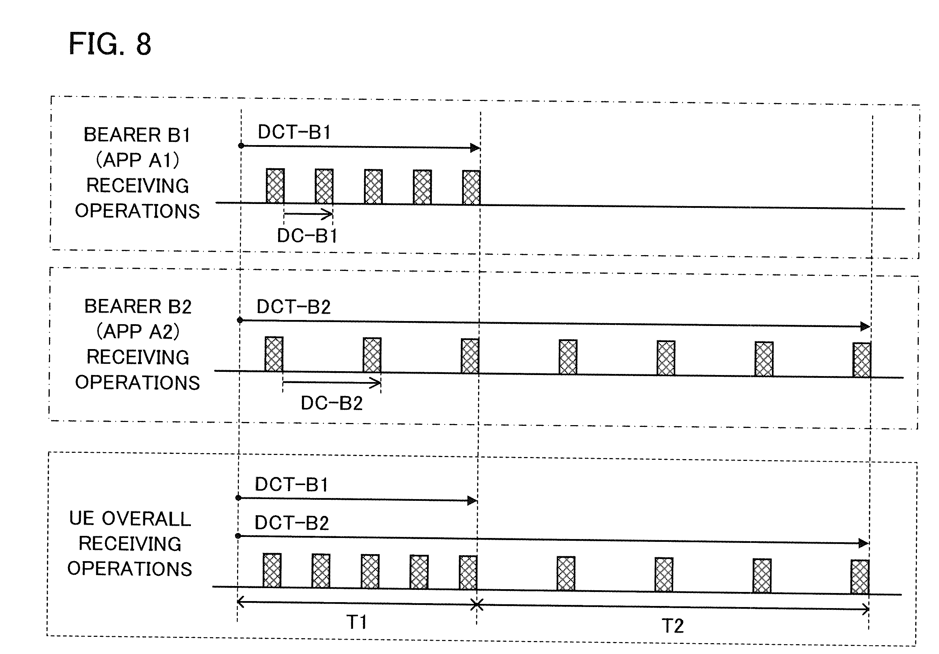

In reference to Fig. 8, discontinuous reception operations suitable for communication with the multiple applications A will be explained. In the configuration of this item, it is assumed that the two applications A1 and A2 are executed in the user apparatus 10. In addition, it is assumed that the application A1 communicates using the bearer B1, and the application A2 communicates using the bearer B2.

Discontinuous reception parameters DP of each bearer B are configured based on a communication frequency characteristic VC of an application A assigned to each bearer B. In the example of Fig. 8, discontinuous reception parameters DP of the bearer B1 are configured based on a communication frequency characteristic VC1 of the application A1, and discontinuous reception parameters DP of the bearer B2 are configured based on a communication frequency characteristic VC2 of the application A2. Furthermore, it shall be noted that in cases in which multiple applications A are assigned to one bearer B, discontinuous reception parameters DP of the bearer B are configured based on communication frequency characteristics VC that correspond to the applications A.

In the configuration of this item, instead of the idle transition timer ITT that is configured for every user apparatus 10, a discontinuous reception completion timer DCT that is configured for every bearer B is employed. The discontinuous reception completion timer DCT is a timer that is started when the discontinuous reception inactivity timer DIT of the bearer B expires, and expires when a predetermined discontinuous reception completion timer value VT has elapsed. In other words, the discontinuous reception completion timer value VT is the required time from when the discontinuous reception mode starts to when this discontinuous reception mode expires. When all of discontinuous reception completion timers DCT of multiple bearers B expire, the user apparatus 10 (the radio communication unit 110) transitions from the discontinuous reception mode to the idle mode.

As illustrated in Fig. 8, the discontinuous reception parameter decision unit 234 of the base station 20 decides discontinuous reception parameters DP-B1 (discontinuous reception completion timer DCT-B 1, discontinuous reception cycle DC-B1, etc.) for bearer B1, and decides discontinuous reception parameters DP-B2 (discontinuous reception completion timer DCT-B2, discontinuous reception cycle DC-B2, etc.) for bearer B2. In other words, the discontinuous reception parameter decision unit 234, based on the discontinuous reception parameters DP, acquires, for every bearer B, the period in which receiving operations should be executed in the discontinuous reception mode.

In the following, for the sake of convenience, the period from when the discontinuous reception completion timer DCT-B1 starts to when this expires is referred to as a period T1, and the period from when the discontinuous reception completion timer DCT-B1 expires to when the discontinuous reception completion timer DCT-B2 expires is referred to as a period T2.

In the configuration of this item as well, the actual receiving operations are executed not in units of the bearers B, but in units of the user apparatus 10 (the radio communication unit 110). As mentioned in the above, the discontinuous reception control unit 130 of the user apparatus 10 controls the radio communication unit 110 based on the discontinuous reception parameters DP supplied from the discontinuous reception parameter transmission unit 238 of the base station 20. In the period T1 of Fig. 8, since it is preferable that the receiving operations be executed in the discontinuous reception cycle DC-B1 for the bearer B1, and it is preferable that the receiving operations be executed in the discontinuous reception cycle DC-B2 for the bearer B2, the radio communication unit 110 is controlled such that the receiving operations are executed in the more frequent discontinuous reception cycle DC-B1. In the period T2 of Fig. 8, since it is preferable that the receiving operations not be executed for the bearer B1 and the receiving operations be executed in the discontinuous reception cycle DC-B2 for the bearer B2, the radio communication unit 110 is controlled such that the receiving operations are executed in the discontinuous reception cycle DC-B2. That is, the discontinuous reception control unit 130 controls the radio communication unit 110 to execute the receiving operations in the period in which the receiving operations should be executed for either of the bearers B. In other words, the radio communication unit 110 is controlled such that the receiving operations are executed in the period that corresponds to a logical sum of the periods in which the receiving operations should be executed, the periods having been determined for every bearer B.

The base station 20 harmonizes with the discontinuous reception operations of the user apparatus 10 that are executed in the above manner and executes downlink transmission to the user apparatus 10. In other words, the transmission control unit 236 of the base station 20, based on the discontinuous reception parameters DP supplied from the discontinuous reception parameter transmission unit 238, in a manner similar to the above, determines the periods in which the user apparatus 10 should be executing the receiving operations for the bearers B, and then determines the period in which the receiving operations should be executed with either of the bearers B as the period in which the user apparatus 10 is executing the receiving operations. Subsequently, the transmission control unit 236 controls the radio communication unit 210 to transmit control signals and packets to the user apparatus 10 while in the period determined as the period in which the user apparatus 10 is executing the receiving operations.

### 4. Details of Discontinuous Reception Operations

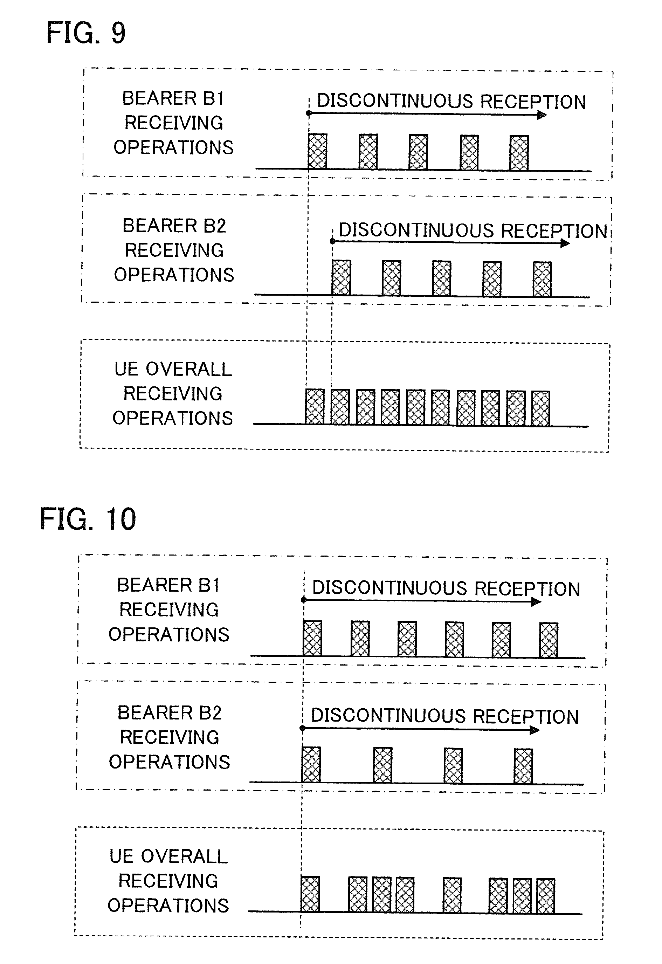

In the above-mentioned configuration of Fig. 8, in order to simplify explanations, a configuration in which a time point at which the discontinuous reception mode starts is common to each of the bearers B is exemplified. However, depending on factors such as the discontinuous reception inactivity timer value VD that is configured for every bearer B and the timing of the transmission and reception of each bearer B, it is possible that there will be cases in which the time points at each of which the discontinuous reception mode starts are different depending on the bearer B. In the above case, if each initial receiving operation is executed at the same time that each discontinuous reception mode starts, as illustrated in Fig. 9, due to the periods in which the receiving operations should be executed being different depending on the bearers B, there is the possibility that the total execution period of the receiving operations will increase.

In addition, if the discontinuous reception cycle DC is freely decided in each bearer B, as illustrated in Fig. 10, due to the periods in which the receiving operations should be executed being different depending on the bearer B, there is the possibility that the execution period of the receiving operations will increase.

Therefore, it is preferable that the discontinuous reception parameters DP be decided in the manner described below.

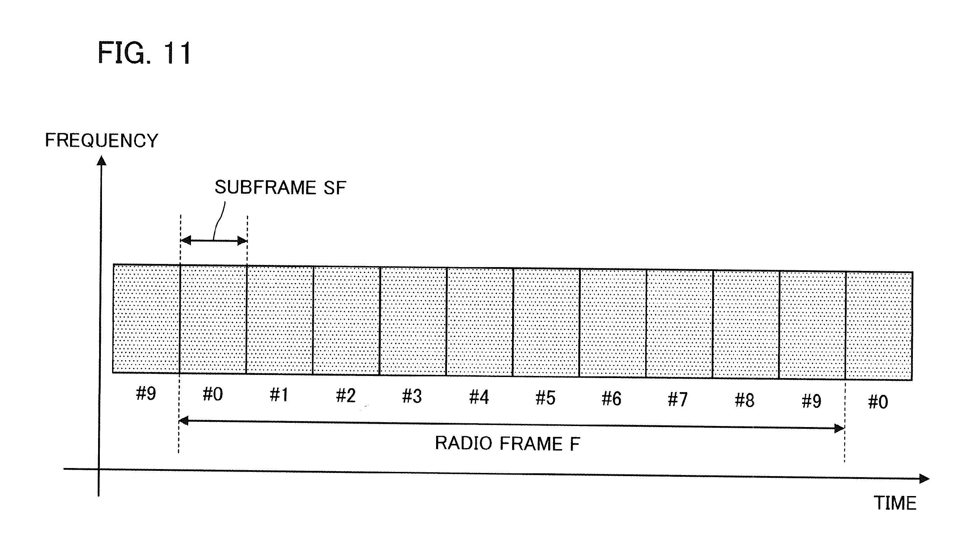

Fig. 11 is a drawing illustrating the configuration of a radio frame F used in the radio communication between the user apparatus 10 and the base station 20. The radio frame F is a unit for transmission of radio signals transmitted by the user apparatus 10 and the base station 20, and accounts for a predetermined length of time (for example, 10 milliseconds) and a predetermined frequency bandwidth (for example, a 15 MHz width). A sequence of the radio signals are configured by continuous transmission of the radio frames F. The radio frame F includes multiple subframes SF. The subframes SF are units for transmission that account for a length of time shorter than the radio frames F (for example, 1 millisecond), and are numbered in order from the head of the radio frame F (#0 through #9 in Fig. 11).

In the configuration of this item, the discontinuous reception parameter decision unit 234 of the base station 20 decides a discontinuous reception offset value VO as a discontinuous reception parameter DP for every bearer B in addition to the abovementioned values, the discontinuous reception offset value VO being the time to first execute the receiving operations after transitioning to the discontinuous reception mode. The discontinuous reception offset value VO is preferably a subframe number (#0 through #9).

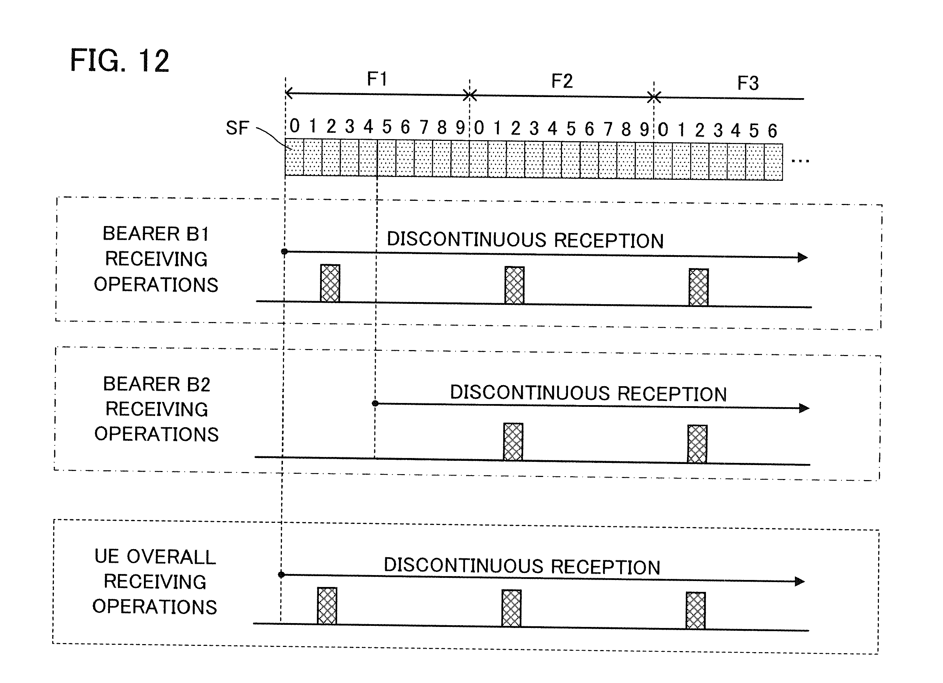

Fig. 12 is a drawing illustrating an example of the discontinuous reception operations in a case in which time points at which the discontinuous reception mode should be started differ between a bearer B1 and a bearer B2. As illustrated in Fig. 12, while a time point at which the discontinuous reception mode should be started for the bearer B1 is a starting point of the subframe SF#0 within the radio frame F1, a time point at which the discontinuous reception mode should be started for the bearer B2 is a starting point of the subframe SF#5 within the radio frame F1. The discontinuous reception cycle DC of the bearer B1 and the bearer B2 is 10 subframes SF long (that is, 10 milliseconds).

The discontinuous reception parameter decision unit 234 decides the discontinuous reception offset values VO (V01, V02) in the user apparatus 10 to be a value common to the bearers B1 and B2. In the example of Fig. 12, the subframe number "#2" is decided as the common discontinuous reception offset value VO.

The discontinuous reception control unit 130 of the user apparatus 10 controls the radio communication unit 110 based on the discontinuous reception parameters DP (the discontinuous reception offset value VO, the discontinuous reception cycle DC, etc.) transmitted from the base station 20. In other words, for the bearer B1, the discontinuous reception control unit 130 determines that the discontinuous reception operations start from the subframe SF#2 of the radio frame F1 that is the first occurrence of the subframe SF#2 after the discontinuous reception mode has been started, and that thereafter the receiving operations should be executed every 10 subframes SF (in other words, in the subframe SF#2 of each radio frame F) that is the discontinuous reception cycle DC. Meanwhile, for bearer B2, the discontinuous reception control unit 130 determines that the discontinuous reception operations start from the subframe SF#2 of the radio frame F2, that is, the first occurrence of the subframe SF#2 after the reception mode has been started, and that thereafter the receiving operations should be executed every 10 subframes SF, that is, the discontinuous reception cycle DC. Subsequently, the discontinuous reception control unit 130 controls the radio communication unit 110 to execute the receiving operations in the period in which the receiving operations should be executed with either of the bearer B1 and the bearer B2 (in other words, in the subframe SF#2 of each radio frame F).

Furthermore, it shall be noted that, similar to the above, the base station 20 is capable of harmonizing with the discontinuous reception operations of the user apparatus 10 that are executed in the above manner (in other words, in the receiving operations execution period of the user apparatus 10 decided in the above manner) so as to execute downlink transmission to the user apparatus 10.

In the above manner, due to each discontinuous reception offset value VO being decided to be a value that is common to every bearer B, the time point at which the first receiving operations are executed after transitioning to the discontinuous reception mode becomes common to every bearer B. Accordingly, compared to a configuration in which it is determined with each bearer B that the receiving operations should be executed immediately after transitioning to the discontinuous reception mode (for example, Fig. 12), as cases in which the periods in which the receiving operations should be executed become common to every bearer B increase, it is possible to realize a reduction of the total execution time of the receiving operations in the user apparatus 10 in the discontinuous reception mode, and thus to realize a reduction of the power consumption of the user apparatus 10.

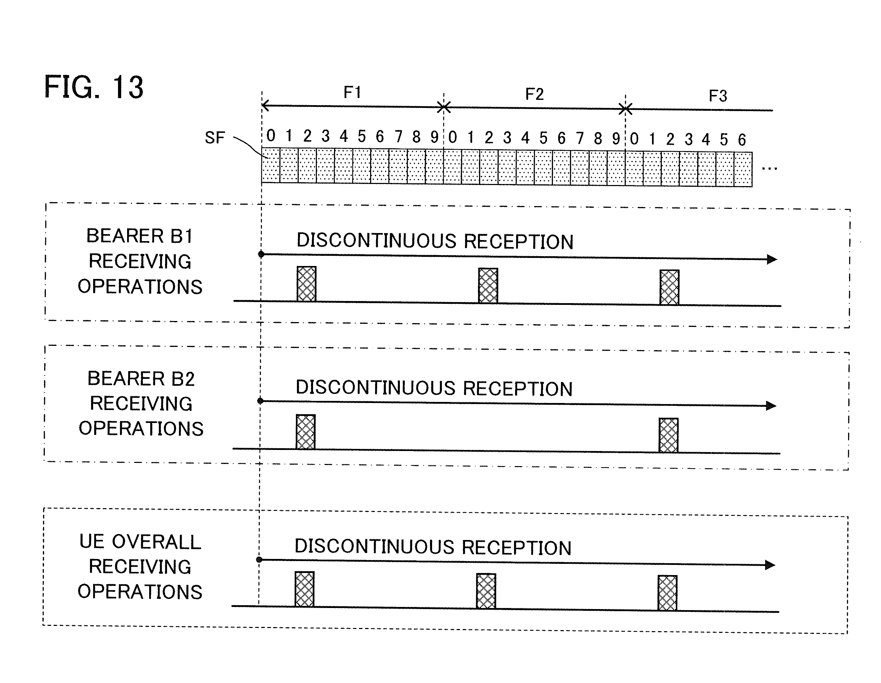

Fig. 13 is a drawing illustrating an example of the discontinuous reception operations in a case in which the discontinuous reception cycles DC differs between the bearer B1 and the bearer B2. As illustrated in Fig. 13, it is assumed that the time point that the discontinuous reception mode should be started for the bearer B1 and the bearer B2 is the starting point of the subframe SF#2 within the radio frame F 1.

The discontinuous reception parameter decision unit 234 decides each discontinuous reception cycle DC to be a value that is an integral multiple of the minimum value of the discontinuous reception cycles DC in the user apparatus 10. In the example of Fig. 13, the discontinuous reception cycle DC1 of the bearer B1 is 10 subframes SF long, and the discontinuous reception cycle DC2 of the bearer B2 is 20 subframes SF long. In other words, the discontinuous reception cycle DC2 is configured to be twice (an integral multiple of) the value of the discontinuous reception cycle DC1 that is the minimum value.

The discontinuous reception control unit 130 of the user apparatus 10 controls the radio communication unit 110 based on the discontinuous reception parameters DP (the discontinuous reception cycles DC1, DC2, etc.) transmitted from the base station 20. In other words, for the bearer B1, the discontinuous reception control unit 130 determines that the receiving operations should be executed every 10 subframes SF starting with the subframe SF#2 within the radio frame F1. Meanwhile, for bearer B2, the discontinuous reception control unit 130 determines that the receiving operations should be executed every 20 subframes SF starting with the subframe SF#2 within the radio frame F1. Subsequently, the discontinuous reception control unit 130 controls the radio communication unit 110 to execute the receiving operations in the period in which the receiving operations should be executed with either of the bearer B1 and the bearer B2 (in other words, in the subframe SF#2 of each radio frame F).

Furthermore, it shall be noted that similar to the above, the base station 20 is capable of harmonizing with the discontinuous reception operations of the user apparatus 10 that are executed in the above manner (in other words, in the receiving operations execution period of the user apparatus 10 decided in the above manner) so as to execute downlink transmission to the user apparatus 10.

In the above manner, due to each discontinuous reception cycle DC being decided to be a value that is an integral multiple of the minimum value of the discontinuous reception cycles DC in the user apparatus 10, the periods in which the receiving operations should be executed determined based on the minimum discontinuous reception cycle DC overlaps with the periods in which the receiving operations should be executed determined based on other (in other words, larger) discontinuous reception cycles DC. Accordingly, compared to a configuration in which a discontinuous reception cycle DC of every bearer B is configured freely without applying a limitation such as that mentioned in the above (for example, Fig. 13), as cases in which the periods in which the receiving operations should be executed become common to every bearer B increase, it is possible to realize a reduction of the total execution time of the receiving operations in the user apparatus 10 in the discontinuous reception mode, and thus to realize a reduction of the power consumption of the user apparatus 10.

### Modifications

The above-mentioned embodiments may be modified in various ways. Some specific modified modes are exemplified below. Two or more modes freely selected from the following exemplifications may be combined appropriately provided that the selected modes do not conflict with each other.

### (1) Modification 1

Although the base station 20 (the discontinuous reception parameter decision unit 234) decides discontinuous reception parameters DP in the above-mentioned embodiments, any of the elements in the radio communication system 1 may decide the discontinuous reception parameters DP. For example, the user apparatus 10 may include a discontinuous reception parameter decision unit that decides the discontinuous reception parameters DP. The discontinuous reception parameters DP decided based on the communication frequency characteristic VC are supplied to the discontinuous reception control unit 130 for controls similar to the embodiments to be executed. In the above case, it is preferable that the discontinuous reception parameters DP that have been decided be supplied to the transmission control unit 236 of the base station 20 via the radio communication unit 110 for controls similar to the embodiments to be executed.

Alternatively, it is also possible to employ a configuration in which the gateway 40 includes a discontinuous reception parameter decision unit.

### (2) Modification 2

The user apparatus 10 and the base station 20 may each individually include a discontinuous reception parameter decision unit. With the abovementioned configuration, since there is no need to transmit the discontinuous reception parameters DP that have been decided from the base station 20 to the user apparatus 10 (or from the user apparatus 10 to the base station 20), it is possible to realize a reduction of radio communication traffic between the user apparatus 10 and the base station 20.

### (3) Modification 3

In the abovementioned embodiments, the discontinuous reception inactivity timer DIT (the discontinuous reception inactivity timer value VD), the discontinuous reception offset value VO, the discontinuous reception cycle DC, and the discontinuous reception completion timer DCT (the discontinuous reception completion timer value VT) are decided based on a communication frequency characteristic VC for every bearer B. However, a part of the above discontinuous reception parameters DP may, for example, be decided as a predetermined fixed value without being based on the communication frequency characteristic VC.

### (4) Modification 4

The user apparatus 10 may be any device that is capable of executing radio communication with the base station 20. In other words, the user apparatus 10 may, for example, be a mobile phone terminal such as a feature phone or smartphone, a desktop-type personal computer, a notebook-type personal computer, an ultra-mobile personal computer, a portable gaming device, or any other radio terminal.

### (5) Modification 5

Each function that the CPU executes in each element (the user apparatus 10, the base station 20, the switching station 30, the gateway 40, etc.) in the radio communication system 1 may be executed with hardware other than the CPU, and for example, may be executed by a programmable logic device such as a FPGA (Field Programmable Gate Array) or DSP (Digital Signal Processor).

### Reference Numerals

- 1: Radio communication system
- 10: User apparatus
- 110: Radio communication unit
- 120: Control unit
- 122: Communication allocation unit
- 124: Application running unit
- 126: Communication frequency characteristic acquiring unit
- 128: Bearer decision unit
- 130: Discontinuous reception control unit
- 20: Base station
- 210: Radio communication unit
- 220: Network communication unit
- 230: Control unit
- 232: Forwarding unit
- 234: Discontinuous reception parameter decision unit
- 236: Transmission control unit
- 238: Discontinuous reception parameter transmission unit
- 30: Switching station
- 40: Gateway
- 410: Network communication unit
- 420: External communication unit
- 430: Control unit
- 432: Communication allocation unit
- 434: Data communication unit
- 436: Communication frequency characteristic acquiring unit
- 438: Bearer decision unit
- A: Application
- B: Bearer
- CV: Communication frequency characteristic
- DC: Discontinuous reception cycle
- DCT: Discontinuous reception completion timer
- DIT: Discontinuous reception inactivity timer
- DP: Discontinuous reception parameter
- F: Radio frame
- IN: Internet
- ITT: Idle transition timer
- NW: Network
- SF: Subframe
- T: Period
- VC: Communication frequency characteristic
- VD: Discontinuous reception inactivity timer value
- VI: Idle transition timer value
- VO: Discontinuous reception offset value
- VT: Discontinuous reception completion timer value

## Claims

1. A radio communication system comprising:
a user apparatus; and
a base station comprising a radio communication unit capable of transmitting control signals related to packet transmission and reception to the user apparatus,
the user apparatus comprising:
a radio communication unit that executes radio communication using multiple bearers established with the base station; and
an application running unit capable of running multiple applications in parallel,
the radio communication system comprising:
a communication frequency characteristic acquiring unit that acquires, for each of the applications, a communication frequency characteristic related to communication that each of the applications run in the user apparatus executes via the radio communication unit of the user apparatus; and
a bearer decision unit that decides, for each of the applications, a bearer to be used for the communication of each of the applications according to the communication frequency characteristic of each of the applications.

2. The radio communication system according to Claim 1, wherein the radio communication unit of the user apparatus is capable of operating in a continuous reception mode in which receiving operations to receive the control signals are continuously executed and in a discontinuous reception mode in which the receiving operations are discontinuously executed,
the radio communication system comprising:
a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires,
the user apparatus comprising:
a discontinuous reception control unit that controls the receiving operations in the discontinuous reception mode and reception mode transition of the radio communication unit of the user apparatus based on the discontinuous reception parameters decided for the bearers,
the base station comprising:
a transmission control unit that determines whether or not the radio communication unit of the user apparatus is executing the receiving operations based on the discontinuous reception parameters decided for the bearers and controls the radio communication unit of the base station to transmit the control signals while in a period in which the radio communication unit of the user apparatus is determined to be executing the receiving operations.

3. The radio communication system according to Claim 2, wherein the discontinuous reception parameter decision unit decides the transition timer value, the discontinuous reception offset value, the discontinuous reception cycle, and the discontinuous reception completion time value as the discontinuous reception parameters.

4. The radio communication system according to Claim 3,
wherein the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and
wherein the discontinuous reception control unit of the user apparatus acquires, for each of the bearers, a period in which the receiving operations should be executed in the discontinuous reception mode based on the discontinuous reception parameters and controls the radio communication unit to execute the receiving operations while in a period in which the receiving operations should be executed for any of the bearers.

5. A user apparatus comprising:
a radio communication unit that executes radio communication using multiple bearers established with a base station;
an application running unit capable of running multiple applications in parallel;
a communication frequency characteristic acquiring unit that acquires, for each of the applications, a communication frequency characteristic related to communication that each of the applications executes via the radio communication unit; and
a bearer decision unit that decides, for each of the applications, a bearer to be used for the communication of each of the applications according to the communication frequency characteristic of each of the applications.

6. A user apparatus, wherein the radio communication unit is capable of operating in a continuous reception mode in which receiving operations to receive control signals transmitted from the base station and related to packet transmission and reception are continuously executed and in a discontinuous reception mode in which the receiving operations are discontinuously executed,
the user apparatus comprising:
a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires; and
a discontinuous reception control unit that controls the receiving operations in the discontinuous reception mode and reception mode transition of the radio communication unit based on the discontinuous reception parameters decided for the bearers.

7. The user apparatus according to Claim 6, wherein the discontinuous reception parameter decision unit decides the transition timer value, the discontinuous reception offset value, the discontinuous reception cycle, and the discontinuous reception completion time value as the discontinuous reception parameters.

8. The user apparatus according to Claim 7,
wherein the discontinuous reception parameter decision unit decides each of the discontinuous reception offset values to be a value common to the bearers and decides each of the discontinuous reception cycles to be a value that is an integral multiple of a minimum value of the discontinuous reception cycles; and
wherein the discontinuous reception control unit acquires, for each of the bearers, a period in which the receiving operations should be executed in the discontinuous reception mode based on the discontinuous reception parameters and controls the radio communication unit to execute the receiving operations while in a period in which the receiving operations should be executed for any of the bearers.

9. A base station in a radio communication system comprising:
the base station comprising a radio communication unit capable of transmitting control signals related to packet transmission and reception; and
a user apparatus that is capable of operating in a continuous reception mode in which receiving operations to receive the control signals are continuously executed and in a discontinuous reception mode in which the receiving operations are discontinuously executed and that runs multiple applications capable of communicating,
wherein communication of the applications is run using bearers, the bearers are established with the user apparatus and the base station, a communication frequency characteristic for communication executed by the user apparatus is acquired for each of the applications, and each of the bearers is decided, for each of the applications, according to the communication frequency characteristic of each of the applications,
the base station comprising:
a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires; and
a transmission control unit that determines whether or not the user apparatus is executing the receiving operations based on the discontinuous reception parameters decided for the bearers and controls the radio communication unit to transmit the control signals while in a period in which the user apparatus is determined to be executing the receiving operations.

10. The base station according to Claim 9, wherein the discontinuous reception parameter decision unit decides the transition timer value, the discontinuous reception offset value, the discontinuous reception cycle, and the discontinuous reception completion time value as the discontinuous reception parameters.

11. The base station according to Claim 10,
wherein the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and
wherein the transmission control unit determines, for each of the bearers, a period in which the user apparatus should execute the receiving operations based on the discontinuous reception parameters and controls the radio communication unit to transmit the control signals while in a period determined as a period in which the receiving operations should be executed for any of the bearers.

12. A network comprising:
a base station comprising a radio communication unit capable of transmitting control signals related to packet transmission and reception to a user apparatus,
wherein the user apparatus is capable of running multiple applications capable of communicating,
the network comprising:
a communication frequency characteristic acquiring unit that acquires, for each of the applications, a communication frequency characteristic related to communication that each of the applications run in the user apparatus executes via the radio communication unit of the user apparatus; and
a bearer decision unit that decides, for each of the applications, a bearer to be used for the communication of each of the applications according to the communication frequency characteristic of each of the applications.

13. The network according to Claim 12, wherein the user apparatus is capable of operating in a continuous reception mode in which receiving operations to receive the control signals are continuously executed and in a discontinuous reception mode in which the receiving operations are discontinuously executed,
the network further comprising:
a discontinuous reception parameter decision unit that decides, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires,
the base station comprising:
a transmission control unit that determines whether or not the user apparatus is executing the receiving operations based on the discontinuous reception parameters decided for the bearers and controls the radio communication unit to transmit the control signals while in a period in which the user apparatus is determined to be executing the receiving operations.

14. The network according to Claim 13, wherein the discontinuous reception parameter decision unit decides the transition timer value, the discontinuous reception offset value, the discontinuous reception cycle, and the discontinuous reception completion time value as the discontinuous reception parameters.

15. The network according to Claim 14,
wherein the discontinuous reception parameter decision unit decides each of the discontinuous reception offset values in the user apparatus to be a value common to the bearers and decides each of the discontinuous reception cycles to be a value that is an integral multiple of a minimum value of the discontinuous reception cycles in the user apparatus; and
wherein the transmission control unit determines of the base station, for each of the bearers, a period in which the user apparatus should execute the receiving operations based on the discontinuous reception parameters and controls the radio communication unit to transmit the control signals while in a period determined as a period in which the receiving operations should be executed for any of the bearers.

16. A communication control method in a radio communication system comprising:
a base station comprising a radio communication unit capable of transmitting control signals related to packet transmission and reception; and
a user apparatus comprising a radio communication unit capable of executing radio communication using multiple bearers established with the base station,
the communication control method comprising:
running multiple applications in parallel in the user apparatus;
acquiring, for each of the applications, a communication frequency characteristic related to communication that each of the applications run in the user apparatus executes via the radio communication unit of the user apparatus; and
deciding, for each of the applications, a bearer to be used for the communication of each of the applications according to the communication frequency characteristic of each of the applications.

17. The communication control method according to Claim 16, wherein the radio communication unit of the user apparatus is capable of operating in a continuous reception mode in which receiving operations to receive the control signals are continuously executed and in a discontinuous reception mode in which the receiving operations are discontinuously executed,
the communication control method comprising:
deciding, for each of the bearers, based on the communication frequency characteristic of at least one of the applications assigned to each of the bearers, as a discontinuous reception parameter used for controlling discontinuous reception executed by the radio communication unit of the user apparatus, at least one of (a) an inactivity timer value that is a required time from when the user apparatus, in the continuous reception mode, no longer receives the control signals up until when the user apparatus transitions to the discontinuous reception mode, (b) a discontinuous reception offset value that is a time when the user apparatus first executes the receiving operations after transitioning to the discontinuous reception mode, (c) a discontinuous reception cycle that is a cycle in which the user apparatus in the discontinuous reception mode executes the receiving operations, (d) a discontinuous reception duration that is a time for which a single round of the receiving operations is continued in the discontinuous reception mode, and (e) a discontinuous reception completion timer value that is a required time from when the user apparatus starts the discontinuous reception mode to when the discontinuous reception mode expires;
in the user apparatus, controlling the receiving operations in the discontinuous reception mode and reception mode transition of the radio communication unit of the user apparatus based on the discontinuous reception parameters decided for the bearers; and
in the base station, determining whether or not the radio communication unit of the user apparatus is executing the receiving operations based on the discontinuous reception parameters decided for the bearers and controlling the radio communication unit of the base station to transmit the control signals while in a period in which the radio communication unit of the user apparatus is determined to be executing the receiving operations.

18. The communication control method according to Claim 17,
wherein, in the deciding of the discontinuous reception parameter, deciding the transition timer value, the discontinuous reception offset value, the discontinuous reception cycle, and the discontinuous reception completion time value as the discontinuous reception parameters.

19. The communication control method according to Claim 18,
wherein, in the deciding of the discontinuous reception parameters, deciding each of the discontinuous reception offset values in the user apparatus to be a value common to the bearers and deciding each of the discontinuous reception cycles to be a value that is an integral multiple of a minimum value of the discontinuous reception cycles in the user apparatus; and
wherein, in the controlling of the receiving operations and the reception mode transition, acquiring, for each of the bearers, a period in which the receiving operations should be executed in the discontinuous reception mode based on the discontinuous reception parameters and controlling the radio communication unit to execute the receiving operations while in a period in which the receiving operations should be executed for any of the bearers.
